(19) Europäisches Patentamt European Patent Office Office européen des brevets

(11) **EP 4 691 737 A1**

(12) **EUROPEAN PATENT APPLICATION**
published in accordance with Art. 153(4) EPC

(43) Date of publication:
**11.02.2026 Bulletin 2026/07**

(21) Application number: **24778944.9**

(22) Date of filing: **26.02.2024**

(51) International Patent Classification (IPC):
**B29C 64/314** (2017.01)    **B29C 64/153** (2017.01)
**B33Y 10/00** (2015.01)    **B33Y 70/00** (2020.01)
**B33Y 80/00** (2015.01)

(52) Cooperative Patent Classification (CPC):
**B29C 64/153; B29C 64/314; B33Y 10/00;**
**B33Y 70/00; B33Y 80/00**

(86) International application number:
**PCT/JP2024/006876**

(87) International publication number:
**WO 2024/202802 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054067**

(71) Applicant: **TOMOEGAWA CORPORATION**
**Tokyo 104-8335 (JP)**

(72) Inventors:
• **UMEHARA, Yoshihiro**
**Shizuoka-shi, Shizuoka 421-0192 (JP)**
• **IKEYA, Hirotoshi**
**Shizuoka-shi, Shizuoka 421-0192 (JP)**

(74) Representative: **Hoffmann Eitle**
**Patent- und Rechtsanwälte PartmbB**
**Arabellastraße 30**
**81925 München (DE)**

(54) **COMPOSITION, SHAPING METHOD AND SHAPED ARTICLE**

(57)    Provided is a composition capable of suppressing occurrence of warpage when the composition is solidified after being dissolved by laser irradiation. A composition according to an aspect of the present invention is for three-dimensional shaping. The composition contains a resin powder. When $T_1$ is a temperature at an intersection of a baseline after melting and an endothermic energy curve before melting and $T_2$ is an endothermic peak temperature at the time of melting in an endothermic energy curve when differential scanning calorimetry is performed on the resin powder, $[T_2 - T_1]$ is 38 to 70°C, and $T_2$ is 130 to 300°C.

[FIG.1]

**Description**

Technical Field

The present invention relates to a composition, a shaping method, and a shaped object.

Background Art

A method (powder bed fusion method (PBF)) in which powders spread flat are laminated layer by layer while being melted and solidified by using a laser as a heat source has been known as a shaping method of a 3D printer. Patent Literature 1 discloses a styrene-based resin as a powder for shaping of a powder bed fusion system.

Citation List

Patent Literature

Patent Literature 1: JP 2019-130864 A

Summary of Invention

Technical Problem

In resin particles for shaping in related art, after being dissolved by laser irradiation, a shaped object undergoes thermal shrinkage due to a temperature difference from an inside of a printer (usually 150°C), and warpage occurs in a sintered film. As a result, there is a problem that a shaped object having a desired dimension cannot be obtained. On the other hand, when a temperature in the printer is increased to prevent the thermal shrinkage described above, since surfaces of the resin particles are melted to cause stickiness, fluidity of the particles is reduced in a powder laying step, and a uniform powder laying surface is difficult to be obtained. As a result, there is a problem that defects occur in shaping.
The present invention has been made in view of the above problems, and an object thereof is to provide a composition capable of fabricating a shaped object having excellent performance in a 3D printer shaping method using a laser as a heat source.

Solution to Problem

One aspect of the present invention is a composition. The composition for three-dimensional shaping includes a resin powder, and when $T_1$ is a temperature at an intersection of a baseline after melting and an endothermic energy curve before melting in an endothermic energy curve when differential scanning calorimetry is performed on the resin powder and $T_2$ is an endothermic peak temperature at the time of melting, $[T_2 - T_1]$ is 38 to 70°C and $T_2$ is 130 to 300°C.
In the composition of the above aspect, the resin powder may be an aggregate of particles containing two or more kinds of resins having different melting points. When $T_3$ is an exothermic peak temperature at the time of crystallization in an endothermic energy curve when the differential scanning calorimetry is performed on the resin powder, $30°C \leq [T_2 - T_3]$.
A median particle size D50 (volume basis) of the resin powder may be 30 to 150 $\mu$m.
An average sphericity of the resin powder may be 0.70 to 0.98.
A loose filling rate (bulk specific gravity/true specific gravity) of the resin powder may be 25 to 60%. A melt flow rate (MFR) of the resin powder at 230°C may be 5 to 100 [g/10 min].
Another aspect of the present invention is a shaping method. The shaping method includes a step of forming a resin solidified layer in a predetermined pattern by using the composition of any one of the aspects described above.
Still another aspect of the present invention is a shaped object. The shaped object is obtained by using the composition according to any one of the aspects described above.

Advantageous Effects of Invention

According to the present invention, it is possible to provide a technique related to a composition capable of fabricating a shaped object having excellent performance in a 3D printer shaping method using a laser as a heat source.

Brief Description of Drawings

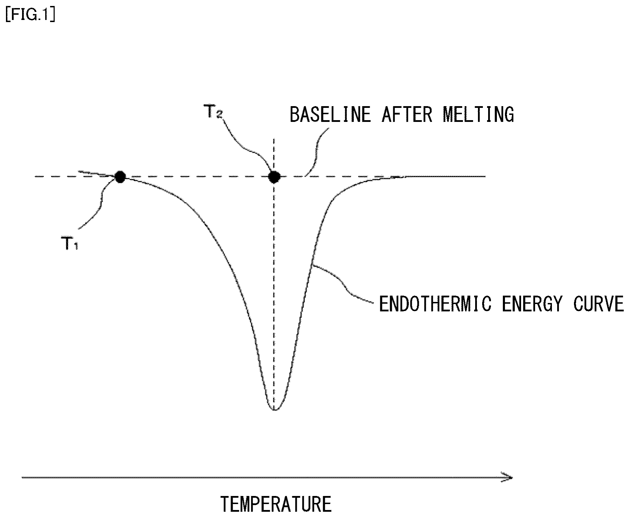

[Fig. 1] Fig. 1 is a diagram schematically illustrating an endothermic energy curve when differential scanning calorimetry is performed on a resin powder.

Description of Embodiments

Hereinafter, an embodiment of the present invention will be described in detail. Note that, in the present specification, the notation "a to b" in the description of the numerical range represents a or more and b or less unless otherwise specified.

A composition according to the embodiment is for three-dimensional shaping. In other words, the composition according to the embodiment can be used as a resin powder for modeling in a so-called 3D printer. The composition according to the embodiment contains a resin powder.

Fig. 1 is a diagram schematically illustrating an endothermic energy curve when differential scanning calorimetry (DSC) is performed on a resin powder (also referred to as a particulate matter). As illustrated in Fig. 1, in the endothermic energy curve when the differential scanning calorimetry is performed on the resin powder, a temperature at an intersection of a baseline after melting and an endothermic energy curve before melting is defined as $T_1$, and an endothermic peak temperature at melting is defined as $T_2$.

In the present embodiment, $[T_2 - T_1]$ is 38 to 70°C, preferably 40 to 66°C, and more preferably 42 to 62°C.

A lower limit of $[T_2 - T_1]$ is set to the above value or more, and thus, resin particles are sufficiently melted at a temperature in the printer. The warpage of the shaped object can be alleviated. On the other hand, an upper limit of $[T_2 - T_1]$ is set to the above value or less, and thus, the resin particles melt sufficiently. A surface is not sticky, and fluidity is not reduced. As a result, the temperature in the printer can be increased, and eventually, the occurrence of warpage of the shaped object can be reduced.

$T_2$ is 130 to 300°C, preferably 135 to 250°C, and more preferably 140 to 200°C.

A lower limit of $T_2$ is set to the above value or more, and thus, mechanical properties of a material itself can be enhanced. Eventually, the strength of the shaped object can be improved. On the other hand, an upper limit of $T_2$ is set to the above value or less, and thus, a temperature change at the time of cooling to a normal temperature after shaping does not become too large. As a result, shrinkage of a resin material is suppressed, and dimensional accuracy of the shaped object can be improved.

In the endothermic energy curve when the differential scanning calorimetry is performed on the resin powder, when a heating peak temperature at the time of crystallization is $T_3$, it is preferable that $30°C \leq [T_2 - T_3]$.

A lower limit of $[T_2 - T_3]$ is set to the above value or more, and thus, it is possible to avoid that the temperature in the printer becomes lower than the crystallization temperature of the resin. The crystallization of the resin is less likely to occur at the time of cooling to the temperature in the printer after laser irradiation, and shrinkage of the shaped object is suppressed. Eventually, the occurrence of the warpage can be suppressed.

A median particle size D50 (volume basis) of the resin powder is preferably 30 to 150 $\mu$m, more preferably 30 to 130 $\mu$m, and still more preferably 30 to 100 $\mu$m. Note that, the median particle size D50 (volume basis) of the resin powder can be measured by a laser diffraction particle size distribution measuring apparatus.

A gap between resin particles is reduced by setting a lower limit of the D50 of the resin powder to the above value or more, and thus, a dense shaped object is easily obtained. As a result, mechanical physical properties are improved, and occurrence of warpage can be suppressed. In addition, the resin particles are hardly soluble in the printer, the fluidity of the resin particles is increased, a powder surface at the time of powder laying can be smoothed, and the denseness of the shaped object can be improved. On the other hand, an upper limit of the D50 of the resin powder is set to the above value or less, and thus, it becomes difficult for the resin powder to be caught by a recoater used for spreading the resin particles at the time of powder laying. As a result, generation of a streak on the powder surface can be suppressed. In addition, at the time of laser irradiation, it becomes easy to melt up to a core of the resin particle, and the dense shaped object is easily obtained. Thus, the mechanical physical properties can be improved, and the occurrence of warpage of the shaped object can be suppressed.

An average sphericity of the resin powder is preferably 0.70 to 0.98, more preferably 0.80 to 0.90, and still more preferably 0.85 to 0.90.

A lower limit of the average sphericity of the resin powder is set to the above value or more, and thus, the fluidity of the resin particles is increased. Accordingly, the powder surface at the time of powder laying becomes smooth, and the denseness of the shaped object is improved. As a result, the mechanical physical properties are improved, and the occurrence of warpage of the shaped object can be suppressed. On the other hand, an upper limit of the average sphericity of the resin powder is set to the above value or less, the fluidity of the resin particles is suppressed from becoming too high, and the resin particles are sufficiently filled. As a result, a contact point between powders is optimized. As a result, even at an end portion of a laser irradiation portion, powders at a non-irradiation portion are not fused to each other, and a shaped object having a desired dimension can be obtained.

A loose filling rate (bulk specific gravity/true specific gravity) of the resin powder is preferably 25 to 60%, more preferably 30 to 57%, and still more preferably 35 to 55%.

A lower limit of the loose filling rate is set to the above value or more, and thus, the gap between the resin particles is reduced. As a result, a dense structure is easily obtained, the mechanical physical properties are improved, and the occurrence of warpage of the shaped object can be suppressed. On the other hand, an upper limit of the loose filling rate is set to the above value or less, the contact point between the resin particles can be sufficiently controlled, and binding of the resin particles to each other can be suppressed at a non-shaping portion (laser non-irradiation portion).

A melt flow rate (MFR) of the resin powder at 230°C is preferably 5 to 100 [g/10 min], more preferably 8 to 90 [g/10 min], still more preferably 10 to 80 [g/10 min].

A lower limit of the MFR of the resin powder is set to the above value or more, and thus, fluidity at the time of melting is not too low. A gap between resin particles can be filled, and a dense shaped object is obtained. As a result, mechanical properties are improved, and the occurrence of warpage of the shaped object is reduced. On the other hand, an upper limit of the MFR of the resin powder is set to the above value or less, and thus, the fluidity at the time of melting is suppressed from becoming too high. The non-irradiation portion remains unmelted at the end portion of the laser irradiation portion, and thus, a shaped object corresponding to a desired dimension can be obtained.

The resin constituting the resin powder is not particularly limited as long as the resin satisfies the above-described temperature characteristics and physical properties, and examples thereof include a thermoplastic resin. Examples of the thermoplastic resin include a crystalline resin. Note that, the crystalline resin means a resin having a melting peak in a case where measurement in accordance with ISO 3146 (plastic transition temperature measurement method, JIS K7121) is performed.

Examples of the crystalline resin include polymers such as polyolefins, polyamides, polyesters, polyethers, polyphenylene sulfide (PPS), liquid crystal polymers (LCP), polyacetals (POM), and polyimides.

Examples of the polyolefin include polyethylene and polypropylene. These resins may be used singly or in combination of two or more kinds thereof.

Examples of the polypropylene include homopolypropylene, random polypropylene, and block polypropylene.

Examples of the polyamide include polyamide 410 (PA410), polyamide 6 (PA6), polyamide 66 (PA66), polyamide 610 (PA610), polyamide 612 (PA612), polyamide 11 (PA11), polyamide 12 (PA12); semi-aromatic polyamide 4T (PA4T), polyamide MXD6 (PAMXD6), polyamide 6T (PA6T), polyamide 9T (PA9T), and polyamide 10T (PA10T). These polyamides may be used singly or in combination of two or more kinds thereof. Among these polyamides, PA9T is also called polynonamethylene terephthalamide, and is generally called semi-aromatic because carbon includes nine diamines and terephthalic acid monomers , and a carboxylic acid side is aromatic. Further, the polyamide of the present disclosure also includes a polyamide called aramid made of p-phenylenediamine and a terephthalic acid monomer as a wholly aromatic polyamide in which a diamine side is also aromatic.

Examples of the polyester include polyethylene terephthalate (PET), polybutadiene terephthalate (PBT), and polylactic acid (PLA).

Examples of the polyether include polyetheretherketone (PEEK), polyetherketone (PEK), polyetherketoneketone (PEKK), polyaryletherketone (PAEK), polyetheretherketoneketone (PEEKK), polyetherketoneetherketoneketone (PEKEKK), and polyethersulfone. Note that, from the viewpoint of economic efficiency, availability, and energy saving, polyolefin is preferable, and polypropylene is particularly preferable.

The resin powder is preferably an aggregate of particles containing two or more kinds of resins having different melting points. Accordingly, while rigidity is obtained by a high-melting-point resin having a relatively high melting point, elongation can be obtained by a low-melting-point resin having a relatively low melting point.

The combination of the high-melting-point resin and the low-melting-point resin is not particularly limited as long as the resin satisfies the above-described temperature characteristics and physical properties, and examples thereof include homopolypropylene and random polypropylene, two kinds of random polypropylenes having different amounts of PE, PPS, and PA6.

In addition to the thermoplastic resin described above, the resin powder may contain a resin powder including a non-crystalline resin, a crystal nucleating agent, a compatibilizer, a plasticizer, an antioxidant, a stabilizer, a coloring inhibitor, a pigment, a dye, an ultraviolet absorber, a release agent, a lubricant, a flame retardant, an antistatic agent, an inorganic fiber, an organic fiber, inorganic particles, and organic particles. These resin powders may be used singly or in combination of two or more kinds thereof. These resin powders may be mixed with the thermoplastic resin described above and may be incorporated in the resin powder, or may be attached to a surface of the resin powder.

Examples of powdering means for producing the resin powder of the present embodiment include a melt granulation method in which a resin composition melted near a melting point is formed into a fibrous form and then cut, a pulverization method in which a resin material including the resin composition is cut or broken by applying an impact or shear, and a method in which a resin incompatible with a matrix component is dispersed in a meltable matrix component and then the matrix component is removed to produce resin particles. Note that, in order to improve the coatability of the powder, since it is preferable that the shape of the powder is rounded, that is, the sphericity is large, it is preferable to select a suitable powder method for the thermoplastic resin contained in the resin powder for a powder stacking shaping method of the present embodiment so as to obtain a powder having such a suitable shape.

In addition, when power is pulverized by pulverization, it is preferable to perform a classification step after pulverization from the viewpoint of removing the stretched powder from the pulverized powder to increase the sphericity.

In this case, examples of a classification method include air classification and sieve classification.

According to the composition described above, it is possible to fabricate a three-dimensional shaped object at a temperature in the printer (for example, 150°C) at which surfaces of the resin particles do not melt and stickiness does not occur. In addition, a shaped object having a desired dimension can be obtained by alleviating thermal shrinkage of the resin in a laser irradiation step and reducing the warpage of the sintered film.

(Shaping Method)

The shaping method according to the embodiment includes a step of forming a resin solidified layer in a predetermined pattern by using the composition described above. Hereinafter, a procedure of the shaping method will be described.

First, a thin layer is formed by using the composition described above. Specifically, after the composition is supplied onto a shaping stage, the composition is spread flat on the shaping stage by a recoater (blade or roll) to form a thin layer for one layer. The thin layer is formed directly on the shaping stage, or is stacked on a thin layer that has already been spread, or on a sintered film that has already been formed.

A thickness of the thin layer can be adjusted according to a thickness of the sintered film and the accuracy of the fabricated shaped object. The thickness of the thin layer is usually about 0.01 to 0.3 mm.

Next, in the stacked thin layer, a region where the shaped object is to be formed is selectively irradiated with a laser beam. The temperature in the printer during laser irradiation can be $[T_2 - 20]$°C to $[T_2 - 10]$°C. The resin powder in the thin layer is melt-bonded by laser irradiation to form a sintered film. The resin powder that has not been irradiated with the laser beam may be recovered as excess powder and reused as recovered powder.

Next, the shaping stage is lowered by a thickness of the sintered film obtained by laser irradiation, and the formation of the thin layer and laser irradiation are sequentially repeated.

A resin solidified layer (3D shaped object) in a predetermined pattern is fabricated by the above method.

(Shaped Object)

The shaped object of the present embodiment is obtained by the shaping method described above by using the composition described above. In the shaped object of the present embodiment, since warpage is less likely to occur in the sintered film obtained by laser irradiation, dimensional accuracy is highly favorable.

Although the embodiment of the present invention has been described above, the embodiment is an example of the present invention, and various configurations other than the above configuration can be adopted.

Examples

Hereinafter, the present invention will be described with reference to Examples and Comparative Examples, but the present invention is not limited thereto.

Compositions (aggregates of resin powders) were fabricated with resin components and blending amounts represented in Table 1-1 to 1-2. Note that, each component of a main resin and a sub resin represented in Table 1-1 to 1-2 is a general-purpose product.

(Differential Scanning Calorimetry)

A differential scanning calorimetry (SSC-5200 manufactured by Seiko Instruments Inc.) was used. Measurement was performed while 50 ml of $N_2$ gas was blown in 1 minute. First, a temperature was raised from 10°C to 330°C at a rate of 5°C per minute, and was held at 330°C for 4 minutes. Next, the temperature was lowered from 330°C to 10°C at a rate of 5°C per minute. An endothermic peak temperature at the time of melting in a temperature rising curve was defined as $T_2$, a baseline was defined as the heat flow at a temperature 30°C higher than T2, and a temperature at an intersection of the baseline and the temperature rising curve before melting was defined as $T_1$. A heating peak at the time of crystallization in a cooling curve was defined as $T_3$. Values obtained from the obtained endothermic energy curve were represented in Table 1-1 to 1-2.

(Measurement of Median Particle Size D50 (Volume Basis))

The particle size distribution of the powder was measured with a laser diffraction particle size distribution measuring apparatus (Mastersizer 3000 from Malvern, wet dispersion unit Hydro MV). A median particle size D50 at which a volume ratio accounted for 50% of a detected particle size distribution was obtained. The obtained values are represented in Table 1-1 to 1-2.

(Measurement of Average Sphericity)

A projected area and a length (circumferential length) of a contour were measured from a projection view of particles by using a circularity measuring device (FPIA-3000S manufactured by Sysmex Corporation), and the sphericity was calculated by the following expression. This sphericity was calculated for 1000 to 2000 particles, and an average value of the values was taken as an average sphericity of the composition (resin powder). The obtained values are represented in Table 1-1 to 1-2.

Sphericity = (circumferential length of circle having same area as projected area of particles)/(length of contour of particle projection view)

(Measurement of Loose Filling rate (Bulk Specific Gravity/True Specific Gravity))

A loose density was measured by using a bulk pycnometer (corresponding to JIS Z-2504, manufactured by Kuramochi Co., Ltd.). The obtained loose density was divided by a true density (true specific gravity) of the resin to calculate a "loose filling rate" of the resin powder. The obtained values are represented in Table 1-1 to 1-2.

(Measurement of MFR)

An MFR of the resin powder was measured under conditions of 230°C and a load of 2.16 kg in accordance with JIS K7210 A method. The obtained values are represented in Table 1-1 to 1-2.

(Evaluation of Warpage)

Due to the use of a powder bed fusion type 3D printer (RaFaEIII 150C-HT) manufactured by ASPECT Inc., a 30 mm square composition was irradiated with a laser beam at a printer internal temperature $[T_2 - 15]$°C to obtain a sintered film (test piece) for one layer. The obtained test piece was allowed to stand in a horizontal place in a downwardly convex state, a taper gauge was inserted into a gap between a horizontal plane and the test piece, and the amount of warp was evaluated according to the following criteria with a height of the gap as the amount of warp.

[Evaluation Criteria]

AA: amount of warpage is 0.05 mm or less
A: amount of warpage is more than 0.05 mm and 0.1 mm or less
B: amount of warpage is more than 0.1 mm and 0.2 mm or less
C: amount of warpage is more than 0.2 mm and 0.3 mm or less
D: amount of warpage is more than 0.3 mm.
AA to C were regarded as acceptable, and D was regarded as unacceptable.

(Physical Properties of Shaped Object: Measurement of Flexural Modulus of Shaped Object)

A three-dimensional shaped object (test piece) having a width of 10 mm, a length of 80 mm, and a thickness of 4 mm was fabricated from each composition by using the powder bed fusion type 3D printer (RaFaEIII 150C-HT) manufactured by ASPECT Inc.. A flexural modulus of the three-dimensional shaped object in a thickness direction was measured by using a Tensiron universal tester (TENSIRON TRG-1250) manufactured by A&D Company, Limited. According to JIS K7171 (2016), a three-point bending test was performed under conditions of an inter-support-point distance of 64 mm and a test speed of 2 mm/min to determine the flexural modulus. A measurement temperature was a room temperature (23°C), the number of measurements was n = 5, and an average value thereof was obtained.

[Evaluation Criteria]

A:    1500 MPa or more
B:    1200 or more and less than 1500 MPa
C:    1000 or more and less than 1200 MPa
D:    less than 1000 MPa

A to C were regarded as acceptable, and D was regarded as unacceptable.

(Tensile Strain Evaluation)

A tensile test according to ISO 527 was performed on the obtained three-dimensional shaped object. AGS-5kN (manufactured by Shimadzu Corporation) was used as a tester. In addition, the test speed in the tensile test was set to 5 mm/min. The tensile test was performed five times, and an average of measured tensile maximum point stresses was defined as tensile strength, and an average of strains at a tensile maximum point was defined as tensile strain. The tensile strength and tensile strain were evaluated based on the following evaluation criteria. The results are represented in Table 1-1 to 1-2. Note that, the strain is represented by "(final length - initial length/initial length) $\times$ 100".

[Evaluation Criteria]

A:    tensile strain is 10% or more
B:    tensile strain is 5% or more and less than 10%
C:    tensile strain is 3% or more and less than 5%
D:    tensile strain is less than 3%

A to C were regarded as acceptable, and D was regarded as unacceptable.

<Dimensional Accuracy>

Each composition (resin powder for three-dimensional shaping) was stored for 1 week in an environment in which a temperature is 27°C and a humidity is 80%RH. With the use of the resin powder for three-dimensional shaping after storage for 1 week, a three-dimensional shaped object was produced by using the powder bed fusion type 3D printer (RaFaEllI 150C-HT) manufactured by Aspect Inc.. Conditions at the time of producing the three-dimensional shaped object are as follows.

Average thickness of powder layer: 0.1 mm
Laser output: 10 watts or more and 150 watts or less
Laser scanning space: 0.1 mm
Floor temperature: temperature 15°C lower than melting point of resin

The three-dimensional shaped object for dimensional accuracy evaluation was a rectangular parallelepiped having a side of 50 mm and an average thickness of 5 mm, and a three-dimensional shaped object was fabricated based on CAD data. A difference between the CAD data of the three-dimensional shaped object and a length of each side of an actually shaped three-dimensional shaped object was obtained, and an average value thereof was taken as a dimensional difference, and "dimensional accuracy" was evaluated based on the following evaluation criteria.

[Evaluation Criteria]

A      dimensional difference is 0.02 mm or less.
B:     dimensional difference is more than 0.02 mm and 0.05 mm or less.
C:     dimensional difference is more than 0.05 mm and 0.10 mm or less.
D:     dimensional difference is more than 0.10 mm and 0.15 mm or less.
A to C    were regarded as acceptable, and D was regarded as unacceptable.

[Table 1-1]

| | Factor, evaluation result or like | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Main resin (crystalline resin) | Homo PP (MFR : 16g/10min) | 90 | | | | | 90 | 90 | 90 | 90 | 90 |
| | Random PP (amount of PE : 5 wt%, MFR : 7 g/10min) | | 90 | | | | | | | | |
| | Random PP (amount of PE : 3 wt%, MFR : 30 g/10min) | | | | 100 | 90 | | | | | |
| | Homo PP (MFR : 2.4 g/10min) | | | | | | | | | | |
| | Homo PP (MFR : 9g/10min) | | | | | | | | | | |
| | Homo PP (MFR : 75g/10min) | | | | | | | | | | |
| | Homo PP(MFR : 100g/10min) | | | | | | | | | | |
| | PPS | | | 90 | | | | | | | |
| | PTFE | | | | | | | | | | |
| Sub resin (crystalline resin) | Random PP (amount of PE : 7 wt%, MFR : 7 g/10min) | 10 | 10 | | | 10 | 10 | 10 | 10 | 10 | 10 |
| | Random PP (amount of PE : 3 wt%, MFR : 30 g/10min) | | | | | | | | | | |
| | PA6 | | | 10 | | | | | | | |
| | PPS | | | | | | | | | | |
| | Total (mass%) | 100 | 100 | 100 | 100 | 100 | 100 | 100 | 100 | 100 | 100 |
| DSC | T1 *1 (°C) | 113 | 85 | 220 | 102 | 97 | 113 | 113 | 113 | 113 | 113 |
| | T2 *2 (°C) | 164 | 134 | 278 | 146 | 146 | 164 | 164 | 164 | 164 | 164 |
| | T3 *3 (°C) | 123 | 104 | 125 | 122 | 122 | 123 | 123 | 123 | 123 | 123 |
| | T2-T1 (°C) | 51 | 49 | 58 | 44 | 49 | 51 | 51 | 51 | 51 | 51 |
| | T2-T3 (°C) | 41 | 30 | 153 | 24 | 24 | 41 | 41 | 41 | 41 | 41 |
| Shape | Particle median size(μm) | 44 | 45 | 48 | 43 | 44 | 25 | 147 | 153 | 48 | 46 |
| | Average sphericity(−) | 0.91 | 0.91 | 0.89 | 0.91 | 0.90 | 0.92 | 0.91 | 0.88 | 0.65 | 0.72 |
| Physical properties | Loose filling rate *4 (%) | 39.9 | 39.9 | 38.1 | 41.2 | 39.5 | 37.4 | 39.9 | 42.3 | 31.0 | 39.9 |
| | MFR( g /10min.) | 16 | 7 | - | 30 | 28 | 14 | 14 | 14 | 14 | 14 |
| Evaluation | Warpage reduction in sintered film | A | A | A | C | C | B | A | A | B | B |
| | Flexural modulus after shaping | A | C | A | B | B | A | A | A | A | A |
| | Tensile strain of shaped object | A | A | A | C | A | C | B | C | C | B |
| | Dimensional accuracy of shaped object | A | A | B | A | A | A | B | B | A | A |
| | Overall evaluation | A | C | B | C | C | C | B | C | C | B |

※1 temperature at intersection of baseline after melting and endothermic energy curve before melting

※2 endothermic peak temperature at time of melting

※3 heating peak temperature at time of crystallization

※4 bulk specific gravity/true specific gravity

EP 4 691 737 A1

8

[Table 1-2]

| Factor, evaluation result or like | Example 11 | Example 12 | Example 13 | Example 14 | Example 15 | Example 16 | Example 17 | Example 18 | Comparative Example 1 | Comparative Example 2 | Comparative Example 3 | Comparative Example 4 |
|---|---|---|---|---|---|---|---|---|---|---|---|---|
| **Main resin (crystalline resin)** — Homo PP (MFR : 16g/10min) | 90 | 90 | 90 | 90 | | | | | 70 | 30 | | |
| Random PP (amount of PE : 5 wt%, MFR : 7 g/10min) | | | | | | | | | | | | |
| Random PP (amount of PE : 3 wt%, MFR : 30 g/10min) | | | | | | | | | | | | |
| Homo PP (MFR : 2.4 g/10min) | | | | | 90 | | | | | | | |
| Homo PP (MFR : 9g/10min) | | | | | | 90 | | | | | | |
| Homo PP (MFR : 75g/10min) | | | | | | | 90 | | | | | |
| Homo PP (MFR : 100g/10min) | | | | | | | | 90 | | | | |
| PPS | | | | | | | | | | | | |
| PTFE | | | | | | | | | | | 100 | 90 |
| **Sub resin (crystalline resin)** — Random PP (amount of PE : 7 wt%, MFR : 7 g/10min) | 10 | 10 | 10 | 10 | 10 | 10 | 10 | 10 | | | | |
| Random PP (amount of PE : 3 wt%, MFR : 30 g/10min) | | | | | | | | | 30 | 70 | | |
| PA6 | | | | | | | | | | | | |
| PPS | | | | | | | | | | | | 10 |
| Total (mass%) | 100 | 100 | 100 | 100 | 100 | 100 | 100 | 100 | 100 | 100 | 100 | 100 |
| **DSC** — T1 *1 (°C) | 113 | 113 | 113 | 113 | 113 | 113 | 113 | 113 | 128 | 93 | 81 | 270 |
| T2 *2 (°C) | 164 | 164 | 164 | 164 | 164 | 164 | 164 | 164 | 165 | 165 | 126 | 327 |
| T3 *3 (°C) | 123 | 123 | 123 | 123 | 123 | 123 | 123 | 123 | 121 | 110 | 91 | 307 |
| T2-T1 (°C) | 51 | 51 | 51 | 51 | 51 | 51 | 51 | 51 | 37 | 72 | 45 | 57 |
| T2-T3 (°C) | 41 | 41 | 41 | 41 | 41 | 41 | 41 | 41 | 44 | 55 | 35 | 20 |
| **Shape** — Particle median size (μm) | 39 | 45 | 50 | 55 | 50 | 48 | 45 | 43 | 55 | 42 | 47 | 49 |
| Average sphericity ( − ) | 0.99 | 0.85 | 0.95 | 0.96 | 0.86 | 0.87 | 0.90 | 0.91 | 0.90 | 0.90 | 0.89 | 0.88 |
| Loose filling rate *4 (%) | 43.0 | 23.0 | 55.0 | 62.0 | 36.5 | 37.2 | 40.5 | 41.1 | 41.0 | 39.4 | 38.8 | 37.5 |
| **Physical properties** — MFR (g /10min.) | 14 | 14 | 14 | 14 | 3 | 9 | 90 | 110 | 21 | 10 | 7 | - |
| **Evaluation** — Warpage reduction in sintered film | A | B | A | A | B | A | A | A | D | D | A | A |
| Flexural modulus after shaping | A | A | A | A | A | A | A | A | A | C | D | D |
| Tensile strain of shaped object | A | C | A | A | C | B | A | A | A | A | A | A |
| Dimensional accuracy of shaped object | C | A | B | C | A | B | B | C | A | A | D | D |
| Overall evaluation | C | C | B | C | C | B | B | C | D | D | D | D |

※1 temperature at intersection of baseline after melting and endothermic energy curve before melting
※2 endothermic peak temperature at time of melting
※3 heating peak temperature at time of crystallization
※4 bulk specific gravity/true specific gravity

**Claims**

1. A composition for three-dimensional shaping, comprising:

   a resin powder,
   wherein, when $T_1$ is a temperature at an intersection of a baseline after melting and an endothermic energy curve before melting in an endothermic energy curve when differential scanning calorimetry is performed on the resin powder and $T_2$ is an endothermic peak temperature at the time of melting, $[T_2 - T_1]$ is 38 to 70°C and $T_2$ is 130 to 300°C.

2. The composition according to claim 1, wherein the resin powder is an aggregate of particles containing two or more kinds of resins having different melting points.

3. The composition according to claim 1 or 2, wherein, when $T_3$ is an exothermic peak temperature at the time of crystallization in an endothermic energy curve when the differential scanning calorimetry is performed on the resin powder, $30°C \leq [T_2 - T_3]$.

4. The composition according to claim 1 or 2, wherein a median particle size D50 (volume basis) of the resin powder is 30 to 150 $\mu$m.

5. The composition according to claim 1 or 2, wherein an average sphericity of the resin powder is 0.70 to 0.98.

6. The composition according to claim 1 or 2, wherein a loose filling rate (bulk specific gravity/true specific gravity) of the resin powder is 25 to 60%.

7. The composition according to claim 1 or 2, wherein a melt flow rate (MFR) of the resin powder at 230°C is 5 to 100 [g/10 min].

8. A shaping method comprising:
a step of forming a resin solidified layer in a predetermined pattern by using the composition according to claim 1 or 2.

9. A shaped object obtained by using the composition according to claim 1 or 2.

[FIG.1]

$T_2$  BASELINE AFTER MELTING

$T_1$

ENDOTHERMIC ENERGY CURVE

TEMPERATURE

## INTERNATIONAL SEARCH REPORT

| International application No. |
| --- |
| **PCT/JP2024/006876** |

**A. CLASSIFICATION OF SUBJECT MATTER**

*B29C 64/314*(2017.01)i; *B29C 64/153*(2017.01)i; *B33Y 10/00*(2015.01)i; *B33Y 70/00*(2020.01)i; *B33Y 80/00*(2015.01)i
FI:  B29C64/314; B29C64/153; B33Y70/00; B33Y80/00; B33Y10/00

According to International Patent Classification (IPC) or to both national classification and IPC

**B. FIELDS SEARCHED**

Minimum documentation searched (classification system followed by classification symbols)

B29C64/314; B29C64/153; B33Y10/00; B33Y70/00; B33Y80/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-196984 A (RICOH COMPANY, LTD.) 13 December 2018 (2018-12-13) <br> paragraphs [0035], [0092]-[0098], [0106]-[0110] | 1-9 |
| X | WO 2020/138188 A1 (MITSUBISHI CHEMICAL CORPORATION) 02 July 2020 (2020-07-02) <br> paragraphs [0059], [0095]-[0112], [0114] | 1-9 |
| A | JP 2021-519709 A (HEWLETT-PACKARD DEVELOPMENT CO., LP) 12 August 2021 (2021-08-12) <br> entire text, all drawings | 1-9 |
| A | JP 2022-532376 A (ARKEMA FRANCE) 14 July 2022 (2022-07-14) <br> entire text | 1-9 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **09 April 2024** | **23 April 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2024/006876**

| Patent document cited in search report | | | Publication date (day/month/year) | Patent family member(s) | | | Publication date (day/month/year) |
|---|---|---|---|---|---|---|---|
| JP | 2018-196984 | A | 13 December 2018 | US paragraphs [0058], [0140]-[0148], [0156]-[0166] EP | 2018/0023219 3272787 | A1 A1 | |
| WO | 2020/138188 | A1 | 02 July 2020 | US paragraphs [0069], [0110]-[0151] EP CN | 2021/0323194 3904097 115943040 | A1 A1 A | |
| JP | 2021-519709 | A | 12 August 2021 | US entire text, all drawings CN | 2021/0139685 112055647 | A1 A | |
| JP | 2022-532376 | A | 14 July 2022 | WO entire text CN | 2020/229782 113950510 | A1 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019130864 A